# EUROPEAN PATENT APPLICATION

(11) **EP 4 083 757 A1**
(43) Date of publication of application: **02.11.2022**
(21) Application number: 22177701.4
(22) Date of filing: 19.10.2020
(51) Int. Cl.: G06F 3/01, G06F 3/042

(54) **TOUCHLESS INPUT INTERFACE FOR AN ELECTRONIC DISPLAY USING MULTIPLE SENSORS**

(62) Divisional of application: 20202580.5
(71) Applicant: ameria AG, 69124 Heidelberg (DE)
(72) Inventor: Seiler, Martin, 69221 Dossenheim (DE); Hixon, Dennis, 69118 Heidelberg (DE)
(74) Representative: Best, Bastian

(57) **Abstract**

The present invention generally relates to techniques for providing a touchless input interface for an electronic display (3). A method is provided which comprises a pointer detection step. The pointer detection step comprises using multiple sensors which are configured for capturing 3D information of a scene to detect point clouds, and combining the point clouds to a combined point cloud. Also provided are a computer program, a data processing apparatus and an arrangement of multiple depth cameras (2), wherein the multiple depth cameras are usable as sensors in the method.

## Description

### 1. TECHNICAL FIELD

The present invention generally relates to techniques for touchless gesture control, and more particularly to a calibration method, a calibration device, and a control method for operating an electronic display.

### 2. TECHNICAL BACKGROUND

Electronic displays have nowadays become omnipresent in various areas of modern life. Examples include electronic displays in public places which provide useful information to the user, e.g. in shopping malls, trade shows, train stations, airports, and the like. One form of such electronic displays are touchscreens that provide interactive functions to allow users to interact with the information, e.g. by selecting control elements such as buttons, selecting items from a list, controlling a cursor, and the like. Such public touchscreens are nowadays used e.g. in ticketing machines, check-out systems in supermarkets or restaurants, interactive signposts, and the like.

However, not least because of the recent Corona pandemic, users have become hesitant to use touchscreens in public places because of health concerns. This has created a desire to provide input capabilities, in particular gesture control, without having to physically touch the display. Some commercial products have already addressed this desire, for example:
The touchless air gesture technology of Gestoos (https://gestoos.com/) aims at transforming touchscreens or digital displays into a touch-free experience. The Gestoos technology uses a depth sensor to allow the user to control the mouse cursor of the operating system, mapping the finger coordinates to its screen position, while the fingers stay at a distance from the screen.

GLAMOS (https://www.kickstarter.com/projects/300948436/glamos-bring-your-touchless-screens-to-life), sets out to use lidar technology to turn screens into interactive touch screens.

AIRxTOUCH (https://www.airxtouch.com/) provides an all-in-one touchless interactive kiosk. Depth sensors detect the user's finger before it touches the display and generates click events. The related international patent application WO 2015/139969 provides technological background.

Touchjet (https://www.touchjet.com/wave-lily/) aims at turning flat screen TVs into a tablet for collaboration and interactive presentations using a digital pen.

Ultraleap (https://developer.leapmotion.com/touchfree/) provides leapmotion, which is a small device (infraread camera) with relatively small range for hand tracking and hand gesture recognition. The system uses a single camera, so that the hand recognition precision is limited and decreases the bigger the screen is.

However, the known technologies either provide complete all-in-one hardware solutions to replace existing displays, provide only limited hand recognition precision or they require a cumbersome calibration of sensors that are added to an existing display in order to reliably detect gestures. What is needed is an easier way of retrofitting existing touchscreens or electronic displays to provide touchless control capabilities that is easy to set up.

It is therefore the technical problem underlying the present invention to provide improved techniques for calibrating an electronic display for touchless gesture control as well as controlling an electronic display with touchless gesture control, thereby at least partly overcoming the disadvantages of the prior art.

### 3. SUMMARY OF THE INVENTION

The present invention is defined in the independent claims. Advantageous modifications of embodiments of the invention are defined in the dependent claims.

One aspect of the invention provides a computer-implemented method of calibrating an electronic display for touchless gesture control. The method may comprise detecting a calibration device in a first position near a first corner of the electronic display using one or more sensors, in particular one or more depth cameras. The method may further comprise detecting the calibration device in at least one second position near at least one second corner of the electronic display using the one or more sensors. Moreover, the method may comprise defining an input area for the electronic display based on the detected positions.

Accordingly, this aspect of the invention provides a particularly easy and convenient, yet exact way of calibrating an electronic display (e.g. an existing screen with or without touch input capabilities) with touchless gesture control. By marking multiple positions on the display, preferably at the corners of the display, coordinates for a three-dimensional input area on top of the electronic display can be defined, in which users can subsequently be allowed to perform gestures that can be captured by the one or more sensors.

In another aspect, the method may further comprise detecting the calibration device in at least two additional positions relative to the electronic display using two sensors, in particular two depth cameras, the at least two additional positions being visible for both sensors. The method may further comprise using the at least two detected additional positions to combine visible areas of the two sensors into a common input area for the electronic display. Using two sensors, e.g. two depth cameras, is preferred, because it allows to capture the entire display screen. In case of two sensors, their respective visible areas can be synchronized by way of the two additional central points marked during the calibration process.

The method may further comprise receiving user input after the calibration device has been placed in one of the positions, and triggering the detecting in response to the user input.

Moreover, the at least one second position may comprise a second, a third and a fourth position, such that the detected positions correspond to four corners of the electronic display. This way, an input area for a conventional rectangular electronic display can be easily calibrated.

The present invention also provides a calibration device. The calibration device may comprise a three-dimensional detection part which is detectable by a sensor, in particular a depth camera. The calibration device may also comprise an alignment part having a geometry which enables the calibration device to be aligned with a corner of an electronic display. Using the described calibration device allows for a particularly easy yet precise calibration according to the methods described further above. However, it should be understood that the above-described methods may also be performed with other suitable calibration devices, or even with the finger of a calibrating user which then serves as the calibration device.

In one aspect of the calibration device, the three-dimensional detection part may have a spherical shape. The three-dimensional detection part may also comprise a camera-recognizable pattern. These aspects serve for improved detectability by the sensor(s).

In another aspect of the calibration device, the alignment part may comprise a footprint, wherein the footprint may be orthogonal to a main axis of the calibration device. This way, the calibration device can be arranged precisely on top of the electronic display to be calibrated, especially without tilting.

The footprint may be rectangular, preferably square-shaped with rounded or beveled corners. This way, the calibration device can engage with a rim around the electronic display to provide for a precise alignment of the calibration device.

Additionally or alternatively, the alignment part may comprise an alignment point on the footprint, which is preferably formed by a pointed end. This variant can be used to align the calibration device on electronic displays which do not have a projecting rim, as will be more apparent from the drawings and the detailed description below.

Still additionally or alternatively, the alignment part may comprise one or more alignment markers or notches around the periphery of the footprint. This variant provides yet another way of precisely aligning the calibration device on the electronic display.

The calibration device may further comprise a grip part at the proximal end. The grip part serves for allowing the calibrating user to securely hold the calibration device in place during the calibration process.

In yet another aspect of the invention, which can be provided together with or separate from the above-described aspects, a computer-implemented method of controlling an electronic display with touchless gesture control is provided. The method may comprise detecting a finger of a user using one or more sensors, in particular one or more depth cameras. The method may further comprise determining when the finger is in a virtual active area on top of the electronic display and when the finger is in a virtual hovering area on top of the active area.

The method may comprise generating a click event when the finger moves back from the active area and into the hovering area. This input variant is particularly intuitive, since it essentially mimics a conventional mouse click behavior known to many users.

The method may also comprise generating a swipe event when the finger moves essentially in parallel to the electronic display in the active area.

Still further, the method may comprise generating a click event when the finger enters the active area from the hovering area. This variant provides for a particularly simple click behavior.

The active area and the hovering area each may have a predefined height. This way, the input method behaves particularly predictable and intuitive because the user quickly learns how close he/she has to put his/her finger towards the electronic display to trigger an input event.

Additionally, or alternatively, determining that the finger enters the active area and/or moves back from the active area may depend on the movement speed of the finger. This way, no specific distance from the display may be needed, but the generation of click or other input events may be rather based on the speed with which the user's finger moves.

The method may further comprise displaying a first type of cursor on the electronic display when the finger is in the hovering area, a second type of cursor when the finger is in the active area, a third type of cursor when the click event is generated and/or a fourth type of cursor when the swipe event is generated. Visual feedback using such cursors further improves the intuitiveness of the input method.

Moreover, the method may further comprise tracking the finger as a pointer once it returns to the hovering area from the active area although another finger is in the active area. This creates a "sticky" finger pointer and avoids false finger detections, as will be explained in more detail further below.

Furthermore, the method may comprise detecting the user near the electronic display using an additional sensor, in particular a depth camera, and creating an event to attract the user to interact with the electronic display. This way, the user, e.g. when passing-by, can be motivated to interact with the electronic display. This aspect may be implemented using any of the techniques described in European patent application 3 447 610 of applicant.

Lastly, the invention also relates to a data processing apparatus comprising means for carrying out the method of any of the methods described herein. The apparatus can be e.g. a generic computer, a special-purpose system such as a ticket machine, a display system for use in a public place such as a trade show, a shopping mall, an airport, or the like, or an electronic display system in the form of a Virtual Interactive Promoter as disclosed in European patent 2 849 442 B1 of applicant.

Lastly, also a computer program is provided comprising instructions which, when the program is executed by a computer, cause the computer to carry out any of the methods disclosed herein.

### 4. SHORT DESCRIPTION OF THE DRAWINGS

In the following detailed description, presently preferred embodiments of the invention are further described with reference to the following figures:
Fig. 1: An electronic display with sensors for use in embodiments of the invention.
Fig. 2: An input area according to embodiments of the invention.
Fig. 3: A calibration device according to embodiments of the invention.
Fig. 4: An electronic display with sensors for use in embodiments of the invention.
Figs. 5a-b: A first input variant according to embodiments of the invention.
Fig. 6: A second input variant according to embodiments of the invention.
Fig. 7: A third input variant according to embodiments of the invention.
Fig. 8: Preventing wrong clicks according to embodiments of the invention.

### 5. DETAILED DESCRIPTION OF PREFERRED EMBODIMENTS

### Calibration procedure

One aspect of the invention relates to a method for prismatic depth capturing, in particular using multiple depth cameras with partial observability. The overall goal is to obtain three-dimensional (3D) points of one or more depth images that lie inside a user-defined prism. While the following embodiments are described using depth cameras, it will be appreciated that other types of sensors may be used in alternative embodiments, such as generally one or more sensors which are configured for capturing 3D information of a scene, e.g. one or more laser sensors, one or more lidar sensors, one or more radar sensors, or combinations thereof. In yet other embodiments, one or more two-dimensional (2D) sensors could be used which capture only a 2D plane. The calibration device described further below would then comprise a cone-shaped detection part, as will be apparent to the skilled reader.

Generally speaking, the user defines 3D points using a calibration device to obtain a polygon. Translating the polygon with a user-defined distance yields a prism. The 3D points are transformed into a common coordinate system. Without limitation, in the following, only the special case where the defined polygon is a rectangle will be described, since this is the most common use-case for a rectangular electronic display.

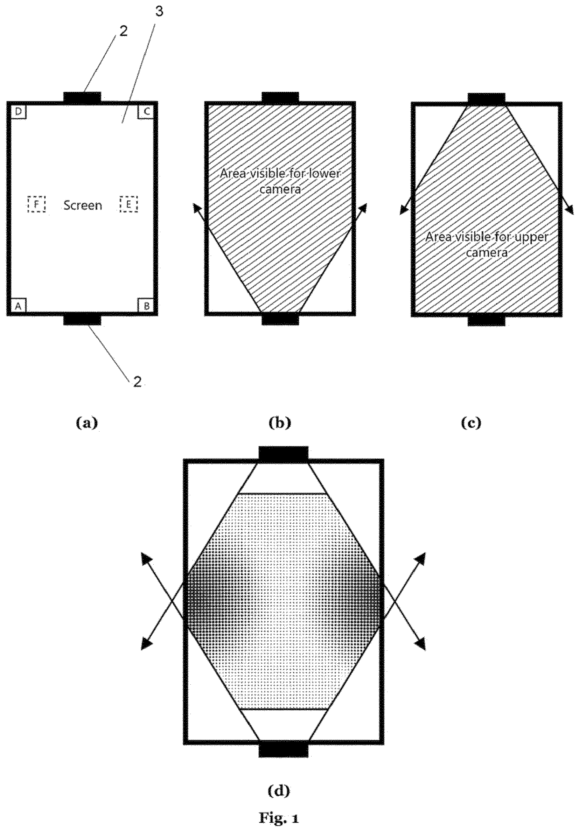

In one embodiment, a computer-implemented calibration method will be described with reference to Fig. 1:
1. The user arranges two depth cameras 2 at opposing edges of an electronic display 3 to be calibrated, preferably at the short edges of the electronic display 3. The user starts a calibration software.
2. The user places a calibration device 1, preferred embodiments of which will be described further below, into a first corner of the electronic display 3, e.g. into the lower left corner "A" of the electronic display 3.
3. Preferably, the user holds the calibration device 1 in place for a predefined amount of time, e.g. for 1 second. The exact amount of time depends on the sample rate of the depth cameras 2 and serves to stabilize the detection.
4. In the embodiment of Figs. 1a-c, the calibration device 1 is positioned within an area visible for the upper depth camera 2 (see Fig. 1(c); note that the camera 2 could also be arranged to the left or right of the display 3, depending on the display orientation), and the depth camera 2 detects the calibration device 1. This allows for calculating a position of the first corner, e.g. the lower left corner "A". The detection by the depth camera 2 may be triggered when the confirms the positioning of the calibration device 1 by a user input such as pressing a key, e.g. the enter key.
5. Step 4 is repeated for all corners of the electronic display 3 in a predefined sequence, e.g. in a counterclockwise direction. As a result, a respective position of each corner of the electronic display 3 is calculated. In the embodiment of Fig. 1(a), the corners "A", "B", "C" and "D" have been detected. Using a predefined sequence (such as starting in the lower-left corner and proceeding in a counter-clockwise fashion, as shown in Figs. 1(a)-(c)) allows to detect the orientation of the electronic display 3. It will be appreciated that the exact sequence and/or the starting corner can be defined arbitrarily.
6. Because of the positioning of the depth cameras 2 relative to the electronic display 3 in the illustrated embodiment, certain points are only visible to one of the depth cameras 2 (see Figs. 1(b) and 1(c)). Therefore, the depth cameras 2 need to be synchronized regarding their individual coordinate systems. A preferred embodiment therefore includes the further step of detecting two central points "E" and "F" (see Fig. 1(a)) which are visible by both depth cameras 2. Accordingly, the calibration device 1 is placed, one after the other, on the two central positions "E" and "F", and their respective positions are calculated. The central positions "E" and "F" should be relatively far away from each other. This allows to transform the two coordinate systems of the depth cameras 2 into one common coordinate system.

A preferred positioning of the two central points "E" and "F" is illustrated in Fig. 1(d) by way of the hatched area. The darker the hatched area, the better the position of the central points "E" and "F" for a reliable detection.

Note that, strictly speaking, only one central point "E" or "F" would be sufficient assuming that the electronic display 3 to be calibrated, or the input area, respectively, is perfectly rectangular. In this case ,the central point would be ideally located on or near a middle line of the electronic display 3. However, using only one central point may result in slightly decreased quality depending on the quality of the detection of the corners, which is in turn dependent on the distance. Therefore, two central points "E" and "F" may result in a more robust synchronization of the two sensors. Note that in case of a non-rectangular screen, as is the case e.g. with a transversely projected image as explained elsewhere herein, two central points are needed in any case.

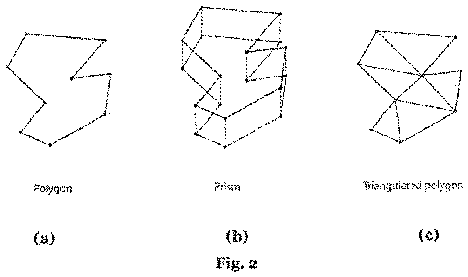

The result of the calibration procedure is a defined input area for the electronic display 3. Examples of the input area are illustrated in Fig. 2. Depending on the positions of the detected points in space, the input area generally comprises a polygon (see Fig. 2(a)), and more preferably comprises a rectangular shape corresponding to the shape of the electronic display 3. Translating the polygon with a predefined distance, e.g. 30 cm, results in a prism (see Fig. 2(b)) which defines an interaction area, the use of which will be explained in more detail further below.

Fig. 2(c) shows an exemplary triangulated polygon for transforming 3D global coordinates in other coordinate systems. In one example, for a given 3D point, it is determined over which triangle of the entire polygon this 3D point is located. This constitutes the first coordinate. The second coordinate is the distance of the 3D point to the plane. Furthermore, the position of the point projected onto the polygon plane is transformed into barycentric coordinates, which results in the third coordinate. Using this representation, the point can easily be represented in a digital representation of the prism.

A side effect is that the digital representation can be deformed (wherein the topology has to be kept intact). A possible usage scenario includes that the screen or interaction area is projected transversely onto a plane by a projector. Thus, the contour of the screen (and thus the polygon) is not a rectangle, although the digital representation can still be rectangular, so that it is possible to compensate the distortion in perspective. In some embodiments, a rectangular screen is split into two polygons.

### Calibration device

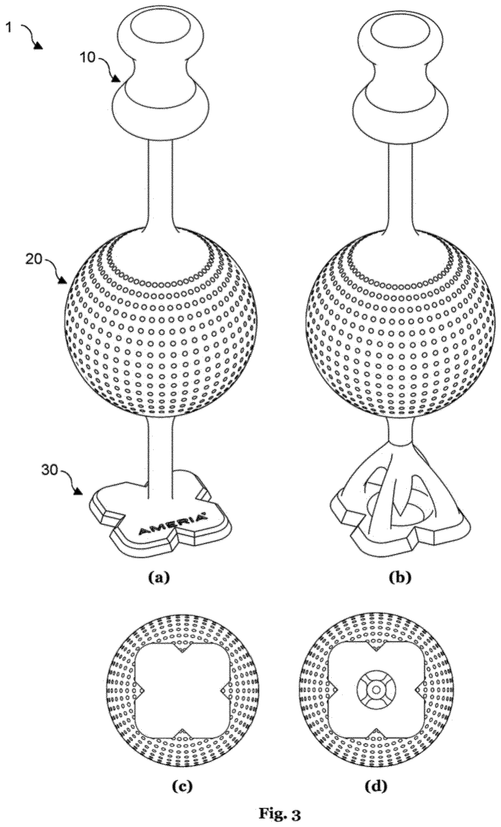

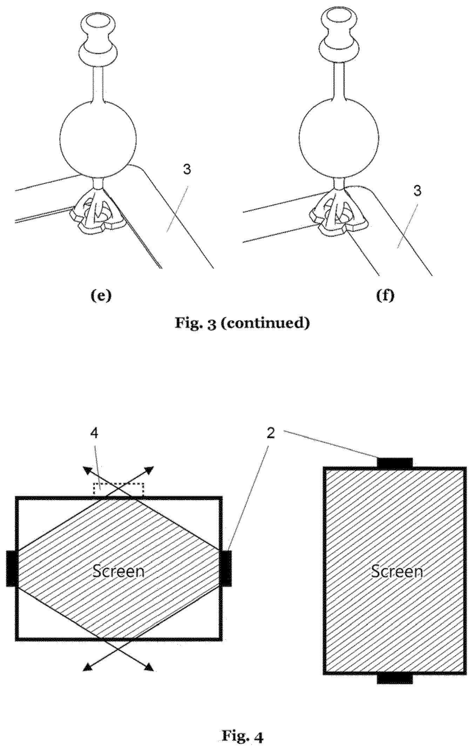

Embodiments of the calibration device 1 will now be described with reference to Fig. 3.

As can be seen in Fig. 1(a), the illustrated calibration device 1 may comprise a grip part 10 for holding the calibration device 1. Various shapes are conceivable for the grip part 10, and the figures depict one possible variant.

The calibration device 1 may further comprise a three-dimensional detection part 20. Generally speaking, the detection part 20 is shaped such that it is detectable by the depth cameras 2. In the illustrated embodiments, the detection part 20 has a spherical or ball shape, which is particularly easily detectable by depth cameras 2. However, other shapes are conceivable.

In the illustrated embodiments, the detection part 20 is arranged at or near the center of the calibration device 1, however, the only requirement is that the detection part 20 is arranged in a predefined distance to a distal end of the calibration device 1 ("distal" meaning facing away from the operating user), so that the position of the center point of the detection part 20 relative to the electronic display 3 can be calculated.

In certain embodiments, the detection part 20 has a smooth or uniform surface (not shown in Fig. 3). Alternatively, the detection part 20 may comprise a camera-recognizable pattern (as illustrated in Fig. 3) to improve the detection reliability. In some of the depicted embodiments, the pattern is formed by a regular arrangement of knobs on the surface of the detection part 20. However, other patterns are conceivable, for example by way of colored markers. The pattern may also be irregular or random.

The calibration device 1 may further comprise an alignment part 30. The alignment part 30 generally has a geometry which enables the calibration device 1 to be aligned with a corner of the electronic display 3. The footprint of the alignment part 30 is preferably orthogonal to a main axis of the calibration device 1 to prevent the calibration device 1 from tilting when it is placed on the electronic display 3.

Figs. 3(a) and (c) show an embodiment in which the alignment part 30 has a flat surface. Accordingly, the footprint is essentially rectangular, and preferably essentially square-shaped. It may comprise rounded or beveled corners. This embodiment allows to place the alignment part 30 "up to the stop", i.e. the alignment part 30 can be placed such that it engages with a protruding rim of the electronic display 3, as illustrated in Fig. 3(e). This allows for a particularly convenient yet exact placement of the calibration device 1 at the corner of the electronic display 3.

Figs. 3(b) and (d) show an alternative embodiment, which can be combined with the embodiment of Figs. 3(a) and (c), in which the alignment part 30 comprises a pointed tip, or more generally speaking an alignment point at the footprint. This variant is helpful for electronic displays 3 without a protruding rim, as is common in more modern displays, and allows to arrange the calibration device 1 in the correct position by arranging the pointed tip over the corner of the electronic display 3, as illustrated in Fig. 3(f). Yet another variant is to provide the alignment part 30 with one or more markers or notches around the periphery of the footprint, as also shown in Fig. 3. It will be appreciated that any of the alignment mechanisms can be combined.

### Touchless input interface

Regardless of the particular calibration method, e.g. according to the embodiments described above, essentially the same hardware setup can be used to provide a touchless input interface for the electronic display 3. In other words, the touchless input interface may use the one or more sensors, e.g. the depth cameras 2, already described above.

In addition, Fig. 4 illustrates an optional third depth camera 4, or other suitable sensor, which may be arranged on or near the electronic display 3 to detect the user from a distance. If so, an attraction event may be called to attract the user to interact with the screen. Such an attraction event may comprise a sound signal, a visual animation on the screen or the display of a virtual person. The virtual person could act as a moderator of the application, asks the user to come closer, explains how to interact, provide more detailed information or explanation to attract the user.

The overall goal of the control method is to detect a hand and/or finger of the user and to generate user interface events corresponding to the hand/finger movement, e.g. click events, swipe events, and the like.

The touchless input interface process of certain embodiments may comprise aspects of pointer detection, pointer tracking and/or pointer interpretation, or combinations thereof. In the following, each aspect will be described separately.

Generally speaking, during pointer detection, the depth cameras 2 detect point clouds. In the embodiments with two depth cameras 2, the corresponding two point clouds are combined to a combined point cloud for both cameras.

The combined point cloud can then be transformed into a 3D grid, and the 3D points are assigned to individual cuboids of the grid. The advantage of using such cuboids is that one does not need to operate on individual pixels of the point cloud, but one can more easily operate on 3D boxes. The dimensions of the cuboids are user-defined.

For each cuboid of the grid, the method may calculate the centroid of the points contained in the cuboid. The result is a grid of cuboid which are filled or not (1/0) and each filled cuboid denotes a distance between the surface of the electronic display 3 and the centroid.

The grid may then be projected onto a plane. The result is a 2D grid in the sense of large pixels with or without centroids. This e.g. corresponds to the contour of a hand on a 2D image. Each pixel denotes a distance between the surface of the electronic display 3 and the pixel.

The method may detect one or more peaks among the pixels, i.e. those pixels/centroids which are nearest to the surface of the electronic display 3 relative to their neighboring pixels/centroids (peak detection). The one or more peaks are interpreted as pointers.

During pointer tracking, a unique identifier may be assigned to each pointer, which serves for tracking the pointer across time. This may further include a frame smoothening, and/or predicting the position of a pointer in case of disruptions of the detection.

During pointer interpretation, different input variants are conceivable. A common principle is that a movement of a finger of a user towards the surface of the electronic display 3 initiates a control event. When the finger moves too close to the surface of the electronic display 3, an animation and/or a sound may be generated to avoid that the user touches the surface of the electronic display 3. the term "finger" is to be understood broadly herein and may e.g. refer to the finger tip or the knuckle, or more generally to any body part with which a user may want to interact with the electronic display 3.

### Input variant 1: Left mouse click behavior

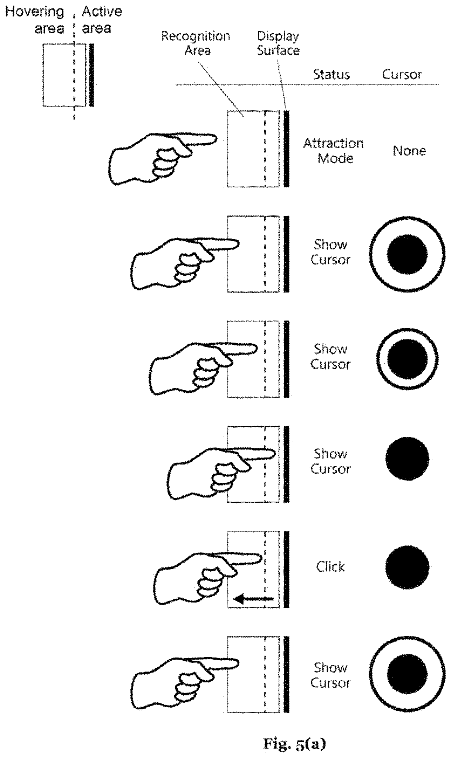

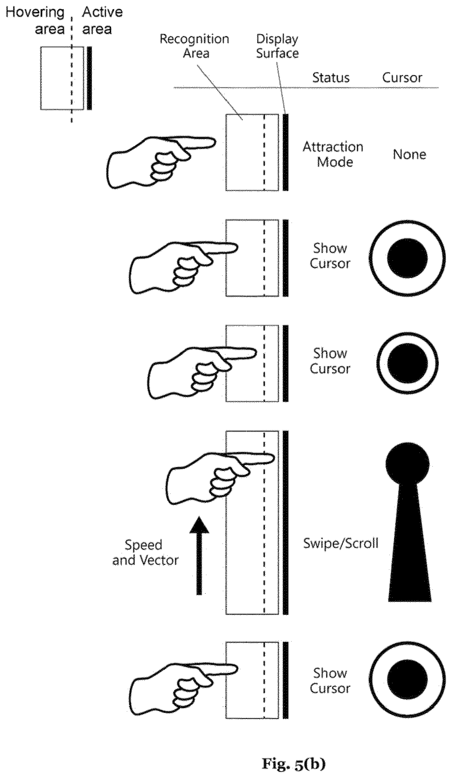

A first input variant will now be described with reference to Figs. 5(a) and 5(b). As can be seen, the input area (labelled "recognition area") provided on top of the surface of the electronic display 3 comprises a virtual active area on top of the display and a virtual hovering area on top of the active area. In the embodiment of Fig. 5(a), the active area and the hovering area have respective predefined heights, illustrated by the dashed line in Fig. 5(a).

When the finger is outside the recognition area, the method may be in attraction mode and may trigger an attraction event as already described. Preferably, no cursor is shown in this mode.

When the finger enters the hovering area, a first type of cursor may be shown, e.g. a double circle as illustrated in Fig. 5(a). The cursor preferably moves on the electronic display 3 as the user's finger moves essentially in parallel to the display 3.

When the finger approaches or crosses the border between the hovering area and the active area, the cursor may change to a second type of cursor to notify the user that he/she is now close to triggering a control event. The second type of cursor may e.g. be a double circle with a larger inner circle as illustrated in Fig. 5(a).

When the finger continues to approach the display surface in the active area, the cursor may change to a third type of cursor, e.g. a filled circle as illustrated in Fig. 5(a).

A click event may be generated when the finger draws back from the active area and back into the hovering area. This input variant essentially mimics a conventional computer mouse clicking behavior, and is therefore particularly intuitive. However, the finger has to go below a predefined distance to the electronic display.

When the finger is in the active area and moves essentially in parallel to the display surface, a swipe event may be generated and the cursor may change to a fourth cursor, as illustrated in Fig. 5(b).

When the finger is back in the hovering area, the first type of cursor may be shown again, as illustrated in Figs. 5(a) and 5(b).

### Input variant 2: Simple click

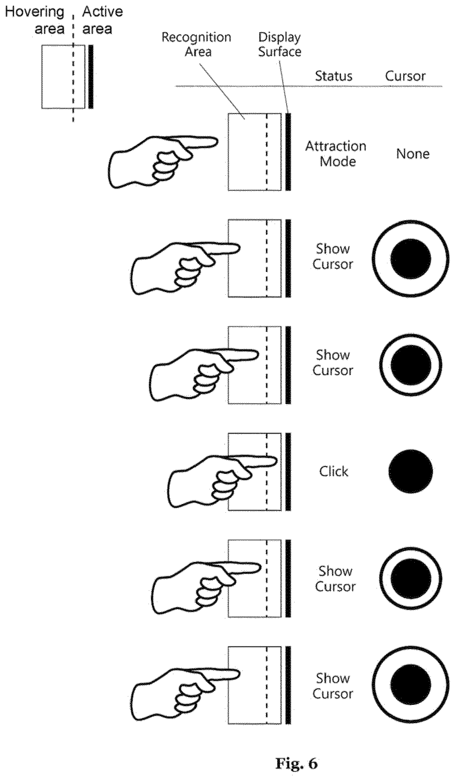

An alternative input variant is shown in Fig. 6. The initial modes and cursor types may be identical to the ones described in connection with the embodiment of Fig. 5a and 5b. However, in this variant, a click event may be generated already when the finger enters the active area. Accordingly, the event is triggered already when the finger points towards the display, which might be particularly intuitive for certain users. On the other hand, the associated control element (e.g. a button) are immediately activated.

Also in the "simple click" variant, a swipe event may be generated, which may be detected based on the speed of the finger movement, i.e. when the speed in the x/y-direction is greater than in the z-direction.

### Input variant 3: Combination of speed and absolute distance

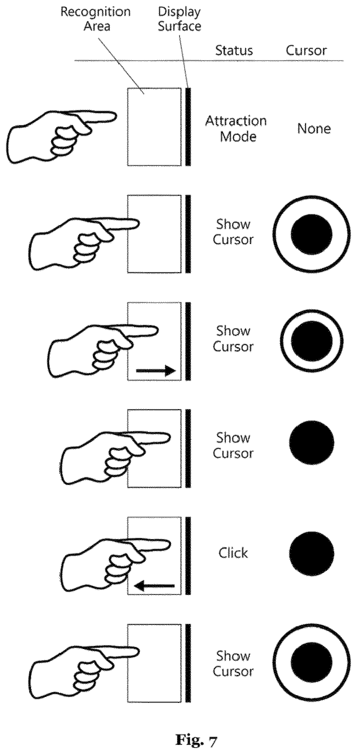

Instead of an active area and hovering area with respective predefined heights, the determination of whether the finger is in the active area may depend on the movement speed of the finger, when the finger is at or below a predefined distance from the display surface. As illustrated in Fig. 7, when the finger moves towards the display surface with a movement speed greater than a predefined threshold, the active area may be deemed to be entered. Likewise, when the finger moves back slightly, a click event may be generated.

This input variant has the advantage that it does not depend on a special plane on top of the display, i.e. a predefined distance to the display, but that gestures can be detected independent of how far or near the finger is relative to the display. On the other hand, this input variant may require a more reliable gesture recognition, and the probability of false inputs may be slightly increased.

### Wrong click prevention

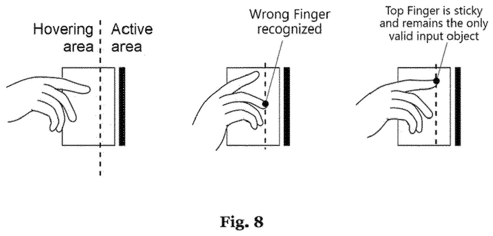

Regardless of the used input variant, the method may designate a finger as the active pointer once it has entered the active area even when the finger is drawn back into the hovering area and another finger enters the active area (see Fig. 8). This way, the first finger is made "sticky" and remains the input object, so that wrong inputs are prevented.

### Further examples

1. A computer-implemented method of calibrating an electronic display (3) for touchless gesture control, wherein the method comprises:
   detecting a calibration device (1) in a first position (A) near a first corner of the electronic display (3) using one or more sensors, in particular one or more depth cameras (2);
   detecting the calibration device (1) in at least one second position (B, C, D) near at least one second corner of the electronic display (3) using the one or more sensors (2); and
   defining an input area for the electronic display (3) based on the detected positions.
2. The method of example 1, further comprising:
   detecting the calibration device (1) in at least two additional positions (E, F) relative to the electronic display (3) using two sensors, in particular two depth cameras (2), the at least two additional positions (E, F) being visible for both sensors (2); and
   using the at least two detected additional positions (E, F) to combine visible areas of the two sensors (2) into a common input area for the electronic display (3).
3. The method of example 1 or 2, further comprising:
   receiving user input after the calibration device (1) has been placed in one of the positions (A-F), and triggering the detecting in response to the user input.
4. The method of any of the preceding examples, wherein the at least one second position (B, C, D) comprises a second, a third and a fourth position, such that the detected positions correspond to four corners of the electronic display (3).
5. A calibration device (1), comprising:
   a three-dimensional detection part (20) which is detectable by a sensor, in particular a depth camera (2); and
   an alignment part (30) having a geometry which enables the calibration device (1) to be aligned with a corner of an electronic display (3).
6. The calibration device of example 5, wherein the three-dimensional detection part (20) has a spherical shape; and/or
   wherein the three-dimensional detection part (20) comprises a camera-recognizable pattern.
7. The calibration device of example 5 or 6, wherein the alignment part (30) comprises a footprint,
   wherein the footprint is orthogonal to a main axis of the calibration device (1); and/or
   wherein the footprint is rectangular, preferably square-shaped with rounded or beveled corners; and/or
   wherein the alignment part (30) comprises an alignment point on the footprint, which is preferably formed by a pointed end; and/or
   wherein the alignment part (30) comprises one or more alignment markers or notches around the periphery of the footprint.
8. The calibration device of any of the preceding examples 5-7, further comprising a grip part (10) at the proximal end.
9. A computer-implemented method of controlling an electronic display (3) with touchless gesture control, wherein the method comprises:
   detecting a finger of a user using one or more sensors, in particular one or more depth cameras (2), and determining when the finger is in a virtual active area on top of the electronic display (3) and when the finger is in a virtual hovering area on top of the active area; and
   generating a click event when the finger moves back from the active area and into the hovering area; or
   generating a swipe event when the finger moves essentially in parallel to the electronic display (3) in the active area; or
   generating a click event when the finger enters the active area from the hovering area.
10. The method of example 9, wherein the active area and the hovering area each have a predefined height; or
   wherein determining that the finger enters the active area and/or moves back from the active area depends on the movement speed of the finger.
11. The method of any one of examples 9-10, further comprising displaying a first type of cursor on the electronic display (3) when the finger is in the hovering area, a second type of cursor when the finger is in the active area, a third type of cursor when the click event is generated and/or a fourth type of cursor when the swipe event is generated.
12. The method of any one of examples 9-11, further comprising tracking the finger as a pointer once it returns to the hovering area from the active area although another finger is in the active area.
13. The method of any one of examples 9-12, further comprising:
   detecting the user near the electronic display (3) using an additional sensor, in particular a depth camera (4); and
   creating an event to attract the user to interact with the electronic display (3).
14. A data processing apparatus comprising means for carrying out the method of any one of examples 1-4 or 9-13.
15. A computer program comprising instructions which, when the program is executed by a computer, cause the computer to carry out the method of any one of examples 1-4 or 9-13.

## Claims

1. A method of providing a touchless input interface for an electronic display (3), wherein the method comprises:
a pointer detection step, comprising:
using multiple sensors which are configured for capturing 3D information of a scene to detect point clouds; and
combining the point clouds to a combined point cloud.

2. The method of claim 1, wherein the multiple sensors comprise one or more depth cameras (2).

3. The method of claim 2, wherein the multiple sensors comprise two depth cameras (2), wherein the two depth cameras are arranged at opposing sides, preferably opposing edges, of the electronic display (3).

4. The method of claim 1 or 2, wherein the depth cameras (2) can each observe only part of the electronic display (3).

5. The method of any one of the preceding claims, wherein the multiple sensors comprise one or more laser sensors, one or more lidar sensors, one or more radar sensors, or combinations thereof.

6. The method of any one of the preceding claims, wherein the pointer detection step further comprises:
transforming the combined point cloud into a 3D grid;
assigning the 3D points to individual cuboids of the 3D grid;
wherein, optionally, the dimensions of the cuboids are user-defined.

7. The method of claim 6, wherein the pointer detection step further comprises:
for each cuboid of the grid, calculating the centroid of the points contained in the cuboid, thereby obtaining a grid of cuboids which are filled or not, wherein each filled cuboid denotes a distance between a surface of the electronic display (3) and the centroid.

8. The method of claim 7, wherein the pointer detection step further comprises:
projecting the grid onto a plane, thereby obtaining a 2D grid of pixels, wherein each pixel denotes a distance between the surface of the electronic display (3) and the pixel.

9. The method of claim 8, wherein the pointer detection step further comprises:
detecting one or more peaks among the pixels, i.e. those pixels which are nearest to the surface of the electronic display (3) relative to their neighboring pixels.

10. The method of claim 9, wherein the pointer detection step further comprises:
interpreting the one or more peaks as pointers.

11. The method of claim 10, further comprising a pointer tracking step, comprising:
assigning a unique identifier to each pointer.

12. The method of claim 11, wherein the pointer tracking step further comprises:
frame smoothening; and/or
predicting the position of a pointer in case of disruptions of the pointer detection.

13. A computer program comprising instructions which, when the program is executed by a computer, cause the computer to carry out the method of any one of claims 1-12.

14. A data processing apparatus comprising means for carrying out the method of any one of claims 1-12.

15. An arrangement of multiple depth cameras (2), wherein the multiple depth cameras are usable as sensors in the method of any one of claims 1-12 for retrofitting an electronic display (3) to provide touchless control capabilities.
